# EUROPEAN PATENT APPLICATION

(11) **EP 2 444 876 A1**
(43) Date of publication of application: **25.04.2012**
(21) Application number: 10382258.1
(22) Date of filing: 29.09.2010
(51) Int. Cl.: G06F 3/03, G06F 17/50, G09B 23/00

(54) **Method and system for the simulation of the human factor in assembly processes**

(71) Applicant: EADS Construcciones Aeronauticas, S.A., 28022 Madrid (ES)
(72) Inventor: Mas Morate, Fernando, 41020, Sevilla (ES); Servàn Blanco, Javier, 41020, Sevilla (ES)
(74) Representative: Elzaburu Marquez, Alberto

(57) **Abstract**

System (1) for positioning a virtual dummy (3) according to the positioning of segments (20) of a physical dummy (2) manipulated by a user of the system (1), such that the positioning of these segments (20) is effected by markers (21) in the physical dummy (2) defining the segments (20), the markers (21) providing the coordinates corresponding with the degrees of freedom of such segments (20), the degrees of freedom of the segments (20) in the physical dummy (2) directly mapping the positioning in the virtual dummy (3), by generating the degrees of freedom of the physical dummy (2) and transferring them directly to the virtual dummy (3). The invention also refers to a method for positioning a virtual dummy (3) according to the positioning of segments (20) of a physical dummy (2).

## Description

### FIELD OF THE INVENTION

The present invention relates to a system and corresponding method for effecting the simulation of the human factor in assembly processes, and more particularly, for the accessibility and ergonomics simulation used in the validation of assembly processes, especially in aircraft assembly lines.

### BACKGROUND

In fabrication and assembly of components, especially in the aircraft industry, the time reduction and the quality improvement are highly important in order to increase the output in the involved tasks oriented to the production of an aircraft. In order to avoid penalties due to longer times and/or lower quality, it is advisable that the processes involved in these tasks are studied virtually beforehand, which allows early detection of mistakes and incidents that can be solved before the production in a certain assembly line is established.

Especially in the aeronautics field, due to the high technology involved in the processes, and due to the exactness and precision required, the processes must be studied previously in a virtual way: this is effected by means of an electronic model, this model comprising three-dimensional CAD models of the aircraft elements and of the tooling required.

Because of this, virtual simulation is used in the aeronautics field, reproducing a task that is to be effected, working with an electronic model comprising a virtual dummy of a certain population and percentile. Performing these simulations is a hard task, because each segment or member of the virtual dummy has to be displaced until the desired posture is reached, for which a specific and complex simulation software has to be used, long time being therefore required.

Studying a process in a virtual way usually requires that this process is simulated: when the simulation of the human factor is required, such simulation will be an accessibility and ergonomics simulation. However, it is to be taken into consideration that human figures are complex structures comprising many joints, with each joint comprising one or more rotational degrees of freedom, having certain limits or constraints, that can moreover interact in a linear or in a non-linear way.

In known virtual simulation of the human factor in assembly processes performed in the aeronautics field, it is thus necessary to use an information input element, this information being further transmitted to an electronic model, this model comprising a virtual dummy of a certain population and percentile, together with three-dimensional CAD models of the aircraft elements and of the tooling required for the assembly processes.

At present, known information input elements comprise two possibilities: a peripheral element, typically a mouse, or a human dummy or model, being also possible the use of the two possibilities together. In these cases, both the peripheral element and the human dummy are used as information input elements in the simulation of the human factor. However, these systems are expensive, time consuming and require the use of specific and intricate installations.

In the case of effecting the simulation of the human factor by means of a human dummy or model, several kinds of systems are known in the art for controlling interactively the positioning of the human dummy or model. However, these systems have the problem that the manipulation is effected in three-dimensions comprising many degrees of freedom, while the operator manipulating the system works with a two-dimensional system comprising only two degrees of freedom, which are the positions in the x and y axis.

The human factor by means of a human dummy or model nowadays is based on a motion system that captures in real time the position of several trackers located in a human dummy or model. One of the problems of these systems is that they are very expensive, as they need to use very costly devices: A usual system comprises a cabling electronic mechanical system in the dummy or model. Another problem of these known systems is based on the location of the trackers within the human dummy or model, the optimum location not being obvious. Still another problem is that this system needs very long cables attaching each sensor used as a tracker to a central unit, which makes the overall system complicated and not optimised. Besides, another problem is that the electromagnetic fields used by these systems are distorted by the presence of metal in the surroundings, which degrades the accuracy and output of these systems. Therefore, it is a need to provide systems that can overcome the mentioned disadvantages, because these systems play increasingly important roles, as it becomes less cost effective or impossible to build a full-size mock-up or subject live actors to threatening situations.

It shall then be desirable to provide a system for effecting the simulation of the human factor in complicated tasks, such as aircraft assembly processes, this simulation being effected in real time, and overcoming the mentioned drawbacks.

### SUMMARY OF THE INVENTION

One object of the present invention is a system for effecting the simulation of the human factor in assembly processes. The human factor simulation shall comprise an accessibility and an ergonomics simulation. The system of the invention is focused to the validation of assembly processes, especially in aircraft assembly lines.

The system of the invention comprises:
- *a data entry and processing module,* comprising:
   - a physical dummy provided with several markers located in specific positions defining segments of the physical dummy, these markers providing the coordinates corresponding with the degrees of freedom of such segments in the physical dummy;
   - a data entry sub-module, capturing the coordinates of the degrees of freedom of the segments in the physical dummy; and
   - a processing sub-module, converting the coordinates of the degrees of freedom in the physical dummy, by the use of inverse kinematics, as a function of the anthropometrics and biomechanical characteristics of a human being, into the positioning coordinates of the segments in a virtual dummy, taking into consideration the population and percentile of the human being represented by the virtual dummy, the processing sub-module operating this conversion directly, by an interface that is not visible to the operator of the system.
- *a simulation module,* comprising:
   - an interface sub-module, capturing the data from the processing sub-module, converting these data into data readable by the simulation software, sending said data to the simulation software, receiving the output data from the simulation software, and sending the output data to a virtual dummy;
   - a virtual dummy, receiving the output data from the interface sub-module and adapting its positioning automatically and in real-time to the positioning of the physical dummy; and
   - an electronic model, comprising three-dimensional CAD models of the aircraft elements and of the tooling required in the assembly process.

In the system of the invention, the number or degrees of freedom of the physical dummy is different from that in the virtual dummy, and in a preferred embodiment it is much more reduced than that in the virtual dummy, the position and degrees of freedom of the physical dummy taken from the markers in the physical dummy directly mapping the positioning in the virtual dummy, by generating the degrees of freedom of the physical dummy and transferring them directly to the virtual dummy.

The system of the invention allows the transfer of the positioning of a physical dummy to the positioning of a virtual dummy, such that this transfer is effected in real-time and in an automatic manner, without the need of using any peripheral systems. The physical dummy acts as a peripheral element in the system of the invention for defining the positioning of the virtual dummy. The virtual dummy is part of the virtual simulation made of the human being, the virtual simulation comprising accessibility and an ergonomics simulation.

Thus, according to the invention, the transfer of data from the physical dummy to the virtual dummy is done directly and continuously controlling the scale differences between both dummies. The system of the invention is able to control the different percentiles of the population selected for the virtual dummy, allowing that this virtual dummy can be used for virtual simulations of accessibility and ergonomics.

The system of the invention allows that, when the positioning of the segments in a physical dummy is modified, this is transferred by means of a simulation module to a virtual dummy, taking into consideration the anthropometrics and biomechanical characteristics of a human being represented by the virtual dummy, such that it can be obtained that the virtual dummy adopts the positioning of the physical dummy in real-time.

Even if the system of the invention is oriented to aircraft assembly lines, it could be used in any other environment or sector in which accessibility and ergonomics simulations are required, for the study and validation of assembly processes.

Another object of the invention is a method for effecting the simulation of the human factor in assembly processes, more particularly in the assembly of aircraft components in aircraft assembly lines.

Other features and advantages of the present invention will be understood from the following detailed description in relation with the enclosed drawings.

### BRIEF DESCRIPTION OF DRAWINGS

Figure 1 shows a schematic view of the elements comprised in the system for effecting the simulation of the human factor in assembly processes, according to the invention.
Figure 2 shows a schematic view of the steps comprised in the method for effecting the simulation of the human factor in assembly processes, according to the invention.

### DETAILED DESCRIPTION OF PREFERRED EMBODIMENTS

A preferred embodiment of the invention will be described in connection with a system 1 by means of which, when the positioning of a physical dummy 2 is modified, the physical dummy 2 acting as a peripheral element of the system 1, and by means of an interface, transfers the positioning of its segments 20 to a virtual dummy 3, by the use of inverse kinematics, as a function of the anthropometrics and biomechanical characteristics of a human being represented by the virtual dummy 3. Therefore, by means of the system 1, the new positioning of the segments 20 of the physical dummy 2 is adopted in real-time by the virtual dummy 3.

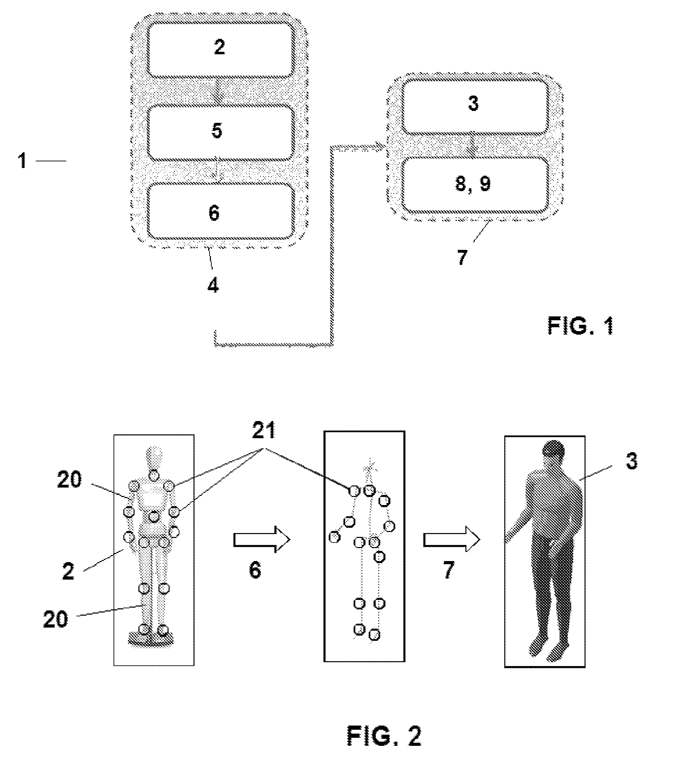

As it can be seen in Figure 1, the system 1 of the invention comprises:
- *a data entry and processing module* 4, comprising:
   - a physical dummy 2 provided with several markers 21 located in specific positions defining segments 20 of the physical dummy 2, these markers 21 proving the coordinates corresponding with the degrees of freedom of such segments 20 in the physical dummy 2;
   - a data entry sub-module 5, capturing the coordinates corresponding with the degrees of freedom of the segments 20 in the physical dummy 2; and
   - a processing sub-module 6, converting the coordinates of the physical dummy 2, by the use of inverse kinematics, and as a function of the anthropometrics and biomechanical characteristics of a human being, into the positioning coordinates of the segments in a virtual dummy 3, taking into consideration the population and percentile of the human being represented by the virtual dummy 3, the processing sub-module 6 operating this conversion directly, by an interface that is not visible to the operator of the system.
- *a simulation module* 7, comprising:
   - an interface sub-module 8, capturing the data from the processing sub-module 6, converting these data into data readable by the simulation software, sending said data to the simulation software, receiving the output data from the simulation software, and sending the output data to a virtual dummy 3;
   - a virtual dummy 3, receiving the output data from the interface sub-module 8 and adapting its positioning automatically and in real-time to the positioning of the physical dummy 2; and
   - an electronic model 9, comprising three-dimensional CAD models of the elements and of the tooling required in the assembly process, such as elements of an aircraft in an assembly line

The simulation software used together with the system 1 of the invention can be any commercial software application existing in the market, such as Delmia (Digital Enterprise Lean Manufacturing Interactive Application), Human Builder, Activity Analysis, Posture Analysis, Measurement Editor, Task Simulation, for example.

The data entry and processing module 4 allows the capture of the coordinates corresponding to the degrees of freedom of the physical dummy 2, these values being converted in movements of segments 20 (parts of the body of the human being represented by the physical dummy 2), these movements of segments 20 being exported to the simulation software, such that these data (movements of segments 20) can be used in accessibility and ergonomics simulations.

The physical dummy 2 used in the system 1 of the invention is for example an anatomically model of the type Art. S. Buck, commercially available. These models are around 20 cm size, having around 30 degrees of freedom, given by the points of articulation in said physical dummy 2, allowing the dummy 2 to display the full range of human movement. The markers 21 are located in specific positions defining the segments 20 of the mentioned physical dummy 2, these markers 21 proving the coordinates of the degrees of freedom of such segments 20 in the physical dummy 2.

The physical dummy 2 is manipulated by the user of the system 1, such that the virtual dummy 3 adopts the positioning of the physical dummy 2, given by the user. The physical dummy 2 comprises several markers 21 by means of which the coordinates of the degrees of freedom of the physical dummy 2 can be obtained at any moment.

The data entry sub-module 5 is able to capture the coordinates of the degrees of freedom in the physical dummy 2.

The processing sub-module 6 comprises algorithms that convert the coordinates of the degrees of freedom of the physical dummy 2 captured into positioning of the virtual dummy 3, as a function of the anthropometrics and biomechanical characteristics of a human being, and as a function of the population and percentile of said human being, the human being represented by the virtual dummy 3.

The simulation module 7 provides a communication interface between the data entry and processing module 4 and the simulation software. The simulation module 7 also provides the functionalities necessary for the use of the system 1 together with the simulation software. The simulation module 7 uses as input the result of the processed data coming from the processing sub-module 6, in a specific format, this format depending on the particular simulation software used by the system 1.

Some of the advantages provided by the system 1 of the invention are the following:
- The known simulation software programs used require that the virtual dummy 3 is manipulated by means of a peripheral element, typically a mouse. Correctly positioning required of the virtual dummy 3 is very difficult and time-consuming, being also necessary a thorough knowledge of the simulation software. The system 1 of the invention saves a lot of time in the positioning of the virtual dummy 3, not being required at the same time to have such a thorough knowledge of the simulation software used.
- The data entry and processing module 4 can be validly used together with any simulation software commercially available.
- Both the data entry and processing module 4 and the simulation module 7 are unique and specific.

It is another object of the present invention to provide a method for effecting the simulation of the human factor in assembly processes, using a system 1 as the one described. Preferably, the method is directed to the assembly of aircraft components in aircraft assembly lines. The method comprises the following steps:
a) obtaining the coordinates of the degrees of freedom of several segments 20 in a physical dummy 2, by means of markers 21 in the physical dummy 2;
b) directly converting the coordinates of the degrees of freedom into the positioning coordinates of the virtual dummy 3 by the use of inverse kinematics, as a function of the anthropometrics and biomechanical characteristics of a human being, taking into consideration the population and percentile of the human being represented by the virtual dummy 3, this conversion not being visible to the user of the system 1;
c) capturing the data from b) and converting these data into data readable by the simulation software;
d) sending said data to the simulation software, together with three-dimensional CAD models of the aircraft elements and of the tooling required in the assembly process from an electronic model 9;
e) receiving output data from d) and sending these data to a virtual dummy 3;
f) adapting the positioning of the virtual dummy 3 automatically and in real-time to the positioning of the physical dummy 2.

Although the present invention has been fully described in connection with preferred embodiments, it is evident that modifications may be introduced within the scope thereof, not considering this as limited by these embodiments, but by the contents of the following claims.

## Claims

1. System (1) for positioning a virtual dummy (3) according to the positioning of segments (20) of a physical dummy (2) manipulated by a user of the system (1), such that the positioning of these segments (20) is effected by markers (21) in the physical dummy (2) defining the segments (20), the markers (21) providing the coordinates corresponding with the degrees of freedom of such segments (20), **characterized in that** the position of the physical dummy (2) is mapped on the virtual dummy (3), by generating the degrees of freedom of the physical dummy (2) and transferring them directly to the virtual dummy (3).

2. System (1) according to claim 1, wherein the number or degrees of freedom of the physical dummy (2) is different from that in the virtual dummy (3).

3. System (1) according to claim 2, wherein the number or degrees of freedom of the physical dummy (2) is lower than that in the virtual dummy (3).

4. System (1) according to any of claims 1-3, that comprises:
- a data entry and processing module (4), comprising:
- a data entry sub-module (5), capturing the coordinates of the degrees of freedom of the segments (20) in the physical dummy (2); and
- a processing sub-module (6), converting the coordinates of the degrees of freedom in the physical dummy (2) into the positioning coordinates of the segments in a virtual dummy (3);
- a simulation module (7), comprising:
- an interface sub-module (8), capturing the data from the processing sub-module (6), converting these data into data readable by the simulation software, sending said data to the simulation software, receiving the output data from the simulation software, and sending the output data to a virtual dummy (3);
- an electronic model (9), comprising three-dimensional CAD models of the environment in which the assembly process is effected.

5. System (1) according to claim 4, wherein the conversion in the processing sub-module (6), is effected by the use of inverse kinematics, as a function of the anthropometrics and biomechanical characteristics of a human being, and as a function of the population and percentile of said human being, represented by the virtual dummy (3).

6. System (1) according to any of the preceding claims, wherein the environment is an aircraft or an aircraft subsystem.

7. Method for positioning a virtual dummy (3) according to the positioning of segments (20) of a physical dummy (2), the method comprising:
a) obtaining the coordinates of the degrees of freedom of several segments (20) in a physical dummy (2);
b) directly converting the coordinates of the degrees of freedom into the positioning coordinates of the virtual dummy (3) by the use of inverse kinematics;
c) capturing the data from b) and converting these data into data readable by the simulation software;
d) sending said data to the simulation software, together with three-dimensional CAD models of the elements used in the assembly process from an electronic model (9);
e) receiving output data from d) and sending these data to a virtual dummy (3);
f) adapting the positioning of the virtual dummy (3) in real-time to the positioning of the physical dummy (2).
